# EUROPEAN PATENT APPLICATION

(11) **EP 3 276 498 A1**
(43) Date of publication of application: **31.01.2018**
(21) Application number: 16191844.6
(22) Date of filing: 30.09.2016
(51) Int. Cl.: G06F 17/27, G10L 15/22, G10L 25/63

(54) **METHOD AND SYSTEM FOR DYNAMICALLY GENERATING ADAPTIVE RESPONSE TO USER INTERACTIONS**

(30) Priority: 27.07.2016 IN 201641025732
(71) Applicant: Wipro Limited, 560 035 Karnataka (IN)
(72) Inventor: MURUGESHAN, Meenakshi Sundaram, 560076 Bangalore (IN); RAMACHANDRA, Manjunath, 560085 Bangalore (IN)
(74) Representative: Finnegan Europe LLP

(57) **Abstract**

Disclosed herein is method and system for dynamically generating adaptive responses to user interactions. A response generating system receives user interactions including user queries from the user. Generic characteristics and user specific features associated with the user are extracted by integrating the user interactions with pre-stored conversation history and data from data sources associated with the user. Further, domain specific keywords from the user interactions are extracted for identifying the domain associated with the user queries. Personality of the user is detected based on the generic characteristics and the user specific features. Finally, adaptive responses to the user queries are dynamically generated based on the personality of the user and the domain associated with the user queries. The method aims at enhancing overall user experience and satisfaction in the conversation along with minimizing the total time required for addressing the user queries.

## Description

### TECHNICAL FIELD

The present subject matter is related, in general, to artificial intelligence and natural language processing. The present subject matter is related more particularly, but not exclusively, to a method and system for dynamically generating adaptive responses to user interactions.

### BACKGROUND

Interactive conversation engines are gaining enormous popularity and widely replacing the conventional Interactive Voice Response (IVR) systems and call-centers. The main advantages of interactive conversation engines are two-fold. First, they eliminate the waiting-time to get into the conversation and call-transfer time, when the user switches the topics. Secondly, the responses can be customized based on user's intent.

Also, the IVRs and other response systems existing today have various shortcomings, such as the response systems providing same answers for all kinds of user and/or user queries without considering the personality of the user. This may not give a pleasant experience of conversation to the users and hence the customer experience will not be satisfying. Further, the responses provided today are static and do not consider the fluctuations in the mood and interest level of the users during the conversation.

However, the conversations between the users and the response systems may be made more effective if the language, accent and terminologies of the end user are used in generating the responses. But, the existing interactive conversation engines do not make use of these user-specific features and hence the responses provided are very generic, creating intelligibility issues and misunderstandings during the conversations.

The challenges mainly faced during dynamically generating adaptive responses to the user queries includes identifying the personality and mood of the user during the conversation based on user-specific features and generic characteristics associated with the user.

### SUMMARY

Disclosed herein is a method for dynamically generating adaptive response to user interactions. The method comprises receiving, by a response generating system, user interactions including one or more user queries. One or more generic characteristics associated with the user are also extracted from the user interactions. Further, one or more user specific features associated with the user are extracted by integrating the user interactions with a pre-stored conversation history of the user and data related to the user from one or more data sources. Furthermore, one or more domain specific keywords associated with the one or more user queries are extracted from the user interactions for identifying domain associated with the one or more user queries. Personality of the user is detected based on the one or more generic characteristics and the one or more user specific features. Upon detecting the personality of the user, one or more adaptive responses to the one or more user queries are generated dynamically based on the personality of the user and the domain associated with the one or more user queries.

Further, the present disclosure discloses a response generating system for dynamically generating adaptive response to user interactions. The response generating system comprises a processor and a memory communicatively coupled to the processor. The memory stores processor-executable instructions, which, on execution, causes the processor to receive user interactions including one or more user queries. One or more generic characteristics associated with the user are also extracted from the user interactions. Further, one or more user specific features associated with the user are extracted by integrating the user interactions with a pre-stored conversation history of the user and data related to the user from one or more data sources. Furthermore, one or more domain specific keywords associated with the one or more user queries are extracted from the user interactions for identifying domain associated with the one or more user queries. Personality of the user is detected based on the one or more generic characteristics and the one or more user specific features. Upon detecting the personality, one or more adaptive responses to the one or more user queries are dynamically generated based on the personality of the user and the domain associated with the one or more user queries.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG. 1A** shows an exemplary environment for dynamically generating adaptive responses to user queries using a response generating system in accordance with some embodiments of the present disclosure;
**FIG. 1B** shows a detailed block diagram illustrating the response generating system in accordance with some embodiments of the present disclosure;
**FIG. 2A** illustrates one or more scenarios in which the user interactions are received in various data forms in accordance with few embodiments of the present disclosure;
**FIG. 2B** shows a block diagram of a conversation management unit in the response generating system in accordance with some embodiments of the present disclosure;
**FIG. 3** shows a flowchart illustrating a method for dynamically generating adaptive responses to the user interactions in accordance with some embodiments of the present disclosure; and
**FIG. 4** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and a response generating system for dynamically generating adaptive responses to user interactions. The response generating system receives user interactions comprising one or more user queries. The user interactions may include any input to the response generating system that is provided by the user. The user interactions may be received in one or more data formats including text, audio and video formats. Upon receiving the user interactions in one of the one or more data formats, the response generating system extracts one or more generic characteristics associated with the user along with one or more user specific features and one or more domain specific keywords in the one or more user queries. The one or more generic characteristics associated with the user may include, without limiting to, emotions of the user (such as anger and joy), gestures, expressions and actions or one or more linguistic variations, such as accent, pitch and loudness in the user interactions. The one or more user specific features are the features and information that are specific to a user. As an example, the one or more user specific features include, without limiting to, general choice of words used by the user during a conversation, slang words used by the user and frequency of switching between the topics which are derived from the conversation history of the user. The term "domain" may refer to a particular field of knowledge or a particular category of information. A domain specific keyword may be any word that belongs to, or is otherwise associated with, a particular domain.

In an embodiment, the one or more user specific features may be obtained by integrating the user interactions with a pre-stored conversation history of the user and data related to the user, obtained from one or more data sources. As an example, the one or more data sources associated with the user may provide information related to interests, favorites and habits of the user. The one or more data sources associated with the user may include, without limiting to, profile of the user on one or more social media websites such as, Facebook®, Twitter® and LinkedIn®. Further, the response generating system extracts one or more domain specific keywords from the one or more user queries. The domain specific keywords or features may be extracted from user utterances by mapping the user utterances with a domain ontology using meaningful n-grams and equivalent form extraction such as synonyms. The pre-processing steps involved in extraction of the domain specific keywords include restricted stop-word removal, Part-of-Speech (POS) tagging and context specific meaning detection using Word Sense Disambiguation (WSD). As an example, the one or more domain specific keywords that may be extracted from a 'banking' related query may include words such as 'principal amount', 'interest rate' and 'tenure'. The one or more domain specific keywords are used to determine the domain to which the one or more user queries belong.

In an embodiment, the response generating system may detect and identify the personality of the user based on the one or more generic characteristics and the one or more user specific features. As an example, the personality of the user may comprise at least one of one or more personal details of the user (E.g.: Name, Gender, Age), mood of the user during initial conversation of the user with the response generating system or interests of the user. Further, the one or more adaptive responses to the one or more user interactions are dynamically generated based on the personality of the user and the domain associated with the one or more user queries. Hence, the one or more adaptive responses provided by the response generating system would be appropriate to the actual domain to which the one or more user queries belong.

Furthermore, the response generating system determines consistency in the mood of the user for generating the one or more adaptive responses that are most adaptive to the current mood of the user. In an embodiment, the consistency in the mood of the user may be determined by comparing the current mood of the user with the mood of the user detected during initial conversation of the user with the response generating system. Determining instant changes in the mood of the user while generating the one or more adaptive responses to the user improves the adaption of the one or more responses to the user, thereby enhancing the user satisfaction level.

In an embodiment, the response generating system provides one or more suggestions to the user when the response generating system is unable to extract the one or more generic characteristics, the one or more user specific features and the one or more domain specific keywords from the user interactions. As an example, the above scenario may arise when the one or more user queries raised by the user are complex and/or require intervention of a domain expert. In such scenario, the one or more suggestions provided to the users may comprise, without limiting to, suggestions to consult a domain expert or a support person, along with one or more predetermined information, such as contact details of the domain experts or support personnel, thereby enhancing the overall user experience. In an embodiment, one or more applications in which the response generating system may be used includes: automated banking conversation systems, interviewing of candidates, product advisory and in automated query systems at ticket bookings.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

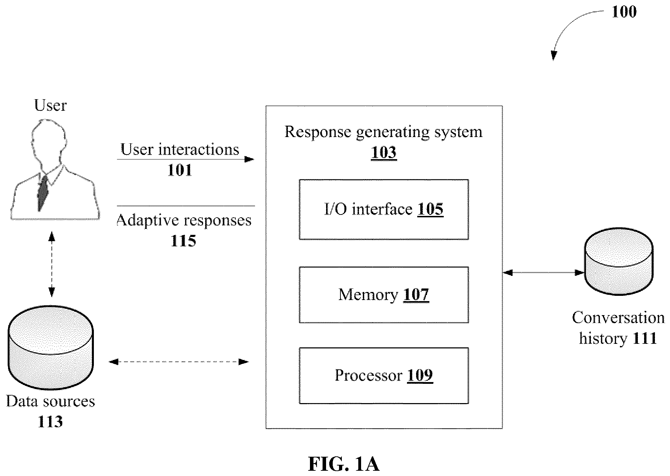

**FIG. 1A** shows an exemplary environment for dynamically generating adaptive responses to user interactions using a response generating system in accordance with some embodiments of the present disclosure.

Accordingly, the environment **100** comprises a response generating system **103** for dynamically generating one or more adaptive responses **115** to one or more user queries received from the user.

The response generating system **103** receives user interactions **101** from the user. The user interactions **101** include one or more user queries. Upon receiving the user interactions **101,** the response generating system **103** extracts one or more generic characteristics **205** associated with the user. As an example, the one or more generic characteristics **205** associated with the user may include, without limiting to, emotions, gestures, expressions, actions or one or more linguistic variations, such as accent, pitch and loudness associated with the user interactions **101** received from the user. Further, the response generating system **103** extracts one or more user specific features **207** associated with the user by integrating the user interactions **101** with pre-stored conversation history **111** of the user. In an implementation the pre-stored conversation history **111** of the user may comprise one or more previous conversations of the user with the response generating system **103,** which may be used to derive and understand the user-specific conversation patterns. In another implementation, the one or more user specific features **207** may be extracted by integrating the user interactions **101** with information obtained from one or more data sources **113** associated with the user along with the pre-stored conversation history **111.** As an example, the one or more data sources **113** associated with the user may include, without limiting to, one or more social media profiles of the user. And the information obtained from the one or more data sources **113** may include, without limiting to, interests, favourites and activities of the user stored in the one or more data sources **113,** such as the social media profiles of the user.

Further, the response generating system **103** extracts one or more domain specific keywords **209** from the user interactions **101** for identifying a domain to which the one or more user queries belong. Upon extracting, the response generating system **103** detects personality of the user **211** based on the one or more generic characteristics **205** and the one or more user specific features **207** associated with the user. Finally, the response generating system **103** generates one or more adaptive responses **115** to the one or more user queries based on the personality of the user **211** and the domain associated with the one or more user queries. An explanation to method of detecting the personality of the user **211** and generating the one or more adaptive responses **115** to the one or more user queries is given in further sections of this disclosure.

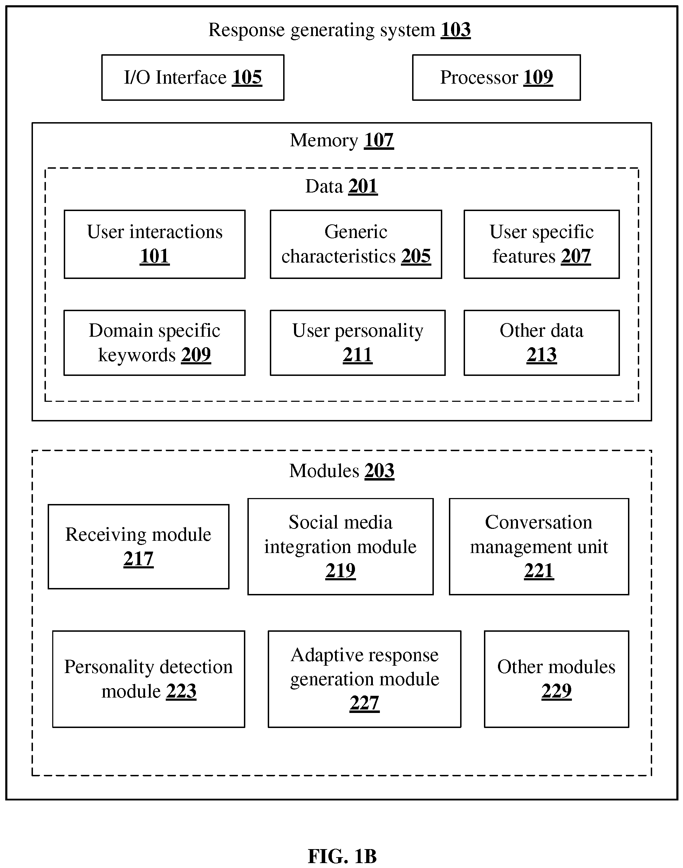

**FIG. 1B** shows a detailed block diagram illustrating the response generating system in accordance with some embodiments of the present disclosure.

The response generating system **103** comprises the I/O interface **105,** the memory **107** and the processor **109.** The I/O interface **105** is configured to receive user interactions **101,** including the one or more user queries from the user. The memory **107** is communicatively coupled to the processor **109.** The processor **109** is configured to perform one or more functions of the response generating system **103** for dynamically generating adaptive responses **115** to the one or more user queries. In one implementation, the response generating system **103** comprises data **201** and modules **203** for performing various operations in accordance with the embodiments of the present disclosure. In an embodiment, the data **201** may be stored within the memory **107** and may include, without limiting to, the user interactions **101,** the one or more generic characteristics **205,** the one or more user specific queries, the one or more domain specific keywords **209,** user personality details/data **211** and other data **213.**

In one embodiment, the data **201** may be stored within the memory **107** in the form of various data structures. Additionally, the aforementioned data **201** can be organized using data models, such as relational or hierarchical data models. The other data **213** may store data, including temporary data and temporary files, generated by modules **203** for performing the various functions of the response generating system **103.**

In an embodiment, the user interactions **101** are received from the user. The user interactions **101** may include one or more user specific information along with the one or more user queries. As an example, the one or more user specific information comprised in the user interactions **101** may include, login credentials (username and passwords used for logging into the response generating system **103)** of the user, name, gender and age of the user. The response generating system **103** may use the user specific information to identify and link with the one or more social media profiles of the user for dynamically understanding the personality of the user **211.**

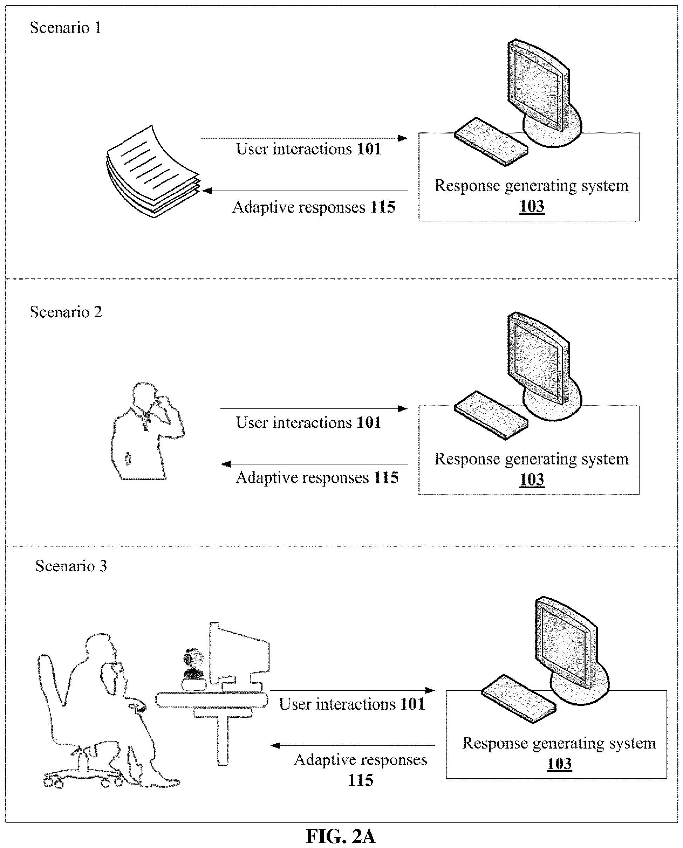

In an embodiment, the user interactions **101** may be received in various data formats such as, text, audio or video, as shown in **FIG. 2A****.** In one scenario, the user interactions **101** may be received in the form of textual content, for example, a handwritten/typed and/or printed paper having set of user queries or an e-mail comprising one or more user queries (indicated as scenario 1 in **FIG. 2A****).** In another scenario, the user interactions **101** may be received in the form of various audio contents, for example, a telephonic conversation between the user and the response generating system **103** (indicated as scenario 2 in **FIG. 2A****).** Similarly, the user interactions **101** may also be received in the form of video contents, for example, a video conference between the user and the response generating system **103,** which may be recorded and relayed using various image capturing devices, such as a webcam configured with user devices associated with the user as indicated in Scenario 3 of **FIG. 2A**.

In an embodiment, the effectiveness and/or level of adaption of the one or more adaptive responses **115** generated by the response generating system **103** may depend on the format in which the user interactions **101** are received. As an example, the effectiveness of the one or more adaptive responses **115** may be higher when the user interactions **101** are received as video contents, since additional details of the user, such as gestures, actions and variations in the expressions of the user are captured during the video conversations. These additional details of the user, in turn, helps the response generating system **103** to understand the mood and personality of the user **211** as the conversation progresses, thereby enhancing the overall effectiveness of the adaptive responses **115** given to the user.

For example, if a user tears a checkbook after hearing that the loan interest rate is increased by 4%, no words are spoken by the user, and there will be no change in the personality or the emotion of the user, however the response generating system **103** may still understand that the user in unhappy, based on the action of the user, which is received in the form a video input. The response generating system **103** may respond back, with an attempt to reduce the commotion. Similarly, the response generating system **103** may reduce the speed in which the one or more adaptive responses **115** are provided to the user, when the response generating system **103** understands that the user is writing down the one or more adaptive responses **115** provided to him, based on the actions of the user captured in the video input. Hence, the effectiveness of the one or more adaptive responses **115** increases when the user interactions **101** are received in the video input format.

In an embodiment, the one or more generic characteristics **205** may be the expressions and emotions of the user and may be received in the form of video inputs. In a broader perspective, the one or more generic characteristics **205** helps the response generating system **103** to understand the way in which the user expresses the general and/or domain specific concepts during the conversation. Clustering of user utterances along with user-specific personality features, such as emotions helps in extraction of the one or more generic characteristics **205** of the user.

In an embodiment, the one or more generic characteristics **205** may be classified under two categories namely, generic characteristics specific to a group and generic characteristics specific to the single user. Uniqueness in the personality of the user **211** drives uniqueness of output from the response generating system **103.** The deviation in the user specific generic characteristics from the group specific generic characteristics may be considered for generating the one or more adaptive responses **115.** For example, consider a user John, who is an engineer and takes soft skills training online through an interactive tutor. Typically, the candidates ask questions on the training subject and how interactive tutor can help their work. However, John's queries may be different and may concentrate more on how to use the skills to earn more money. Hence, the tutor needs to identify unique personality of John while answering the queries raised by John. In this scenario, the interactive tutor may have to consider the deviation in the generic characteristics of John with respect to the generic characteristics relating to the other candidates using the interactive tutor, for improving the adaption of responses to John.

In an embodiment, the one or more user specific features **207** are extracted by integrating the user interactions **101** with the conversation history **111** and the social media activities of the user. The association among the one or more adaptive responses **115** and the user utterances recorded in the conversation history **111** are exploited using dialog history and user activity trends in the social media profile of the user. The dialogue history contains vital information on how the user expresses his views and concepts on a particular topic. The choice of words, slang words, frequency of switching between the concepts and satisfied/unsatisfied comments are all captured from the social media activities of the user. Further, a feedback based learning mechanism makes use of the aforementioned features from the user specific conversation history **111** to extract the one or more user specific features **207.**

In an embodiment, the one or more domain specific keywords **209** are the one or more keywords that relate to various domains that a user query belongs. In an implementation, the one or more domain specific keywords **209** may be extracted based on a domain ontology model built in the response generating system **103.** The domain ontology model indicates relation between the user utterances and various domains and/or core concepts handled by the response generating system **103.** Further, special patterns such as, numeric values and date-time patterns are recognized to identify the keywords relating to these special patterns. The numeric value patterns may be used to associate the numbers such as money and cheque number. For example, consider a domain specific user request and/or conversation such as "Show the jewelry related transactions which are above Rs. 2000". Here, the number 2000 may be mapped with the currency based on the context "Rs.". The numeric value extraction is dependent on the context features and their proximity and may map multiple numeric values in the same utterance with respective context. Further, date-time information may be extracted using existing approaches/tools such as "Ternip". For example, consider a user query - "How much did I spend in the months of March, April and July in 2016?" Here, the three months are to be separately extracted to retrieve required information from a backend database. Also, each context of the conversation is separately classified to understand what the user is referring to and to identify the domain to which the context belongs.

In an embodiment, the user personality **211** (also referred as personality of the user **211)** comprises at least one of one or more personal details of the user, mood of the user during initial conversation of the user with the response generating system **103** and interests of the user. The personality of the user **211** may be detected based on the one or more generic characteristics **205** and the one or more user specific features **207.** In an embodiment, the consistency in the mood of the user may directly relate to the personality of the user **211.** The variations in the mood of the user during the course of the conversation are analyzed to provide the appropriate response for the one or more user queries. The personality is determined based on the interest level of the user in the conversation as evident in the voice, gesture and choice of words made by the user. If the user is interested in the conversation, additional information related to the one or more user queries will be provided to the user.

On the other hand, if the user is not interested, a summarized view of the responses may be provided to cut short the conversation. E.g. in some cases, the user may implicitly express "ok, next" "then" etc. or explicitly say "for now it is enough" 'I don't like it". Also, if the user intervenes and tries to summarize what the machine is telling, it often indicates that the user is in a hurry and prefers the summarized conversation. The user may also get annoyed when extra information on the same user query is given for a long time period. Effectively, the response generating system **103** makes use of the personality of the user **211** to provide right amount of information in response to the specific user queries. It also ensures that the users do not carry a bad experience and/or a negative impact because of the conversation. i.e., a (happily started) conversation ends happily as far as possible. Further, various states of the user including, the user's grasping power, ability to narrate and express a particular concept, user's alertness and memory factors are considered and stored under the personality of the user **211.**

In an embodiment, the data **201** may be processed by one or more modules **203** of the response generating system **103.** In one implementation, the one or more modules **203** may be stored as a part of the processor **109.** In another implementation, the one or more modules **203** may be communicatively coupled to the processor **109** for performing one or more functions of the response generating system **103.** The modules **203** may include, without limiting to, a receiving module **217,** a social media integration module **219,** a conversation management unit **221,** a personality detection module **223,** an adaptive response generation module **227** and other modules **229.**

As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality. In an embodiment, the other modules **229** may be used to perform various miscellaneous functionalities of the response generating system **103.** It will be appreciated that such aforementioned modules may be represented as a single module or a combination of different modules.

In an embodiment, the receiving module **217** receives interactions **101** from the user in one or more data formats. Further, a multiple input handling technique configured in the receiving module **217** may be used to handle and extract required information from various formats of the user interactions **101** received by the receiving module **217,** as explained in the below scenarios.

### Scenario 1: User interactions in text format.

In an embodiment, the sentiments and mood specific features of the user are extracted from the textual inputs using global and local polarity feature weight methods. The global polarity features are the features that have common meanings across all domains, for example, the features like 'good' and 'bad'. The intent of local polarity features differ based on the context and associated features. For example, the polarity feature 'high' can be positive for a domain 'review score' and negative for a domain 'pricing'.

### Scenario 2: User interactions in audio format.

In an embodiment, the characteristics such as, formants, accent, pitch, loudness and emotions of the user are extracted from the audio based user interactions **101** using a binary decision tree at each node. Further, a power spectrum of the user utterance is considered for extracting the audio characteristics mentioned above. In an example, the user interactions **101** in the audio formats get converted to the text format using a Speech-to-Text conversion technique.

### Scenario 3: User interactions in video format.

In an embodiment, the user interactions **101** in the video input format may be captured using appropriate image/video capturing devices configured at the location of the user. These video user interactions **101** are used to understand variations in the mood of the person. The video inputs may also help in detecting gender, age and/or an age group to which the user belongs. In an implementation, a standard set of parameters, such as contours of face, mouth and eyebrows are used to define facial emotions of the user. As an example, the contour which is below a threshold level may define degree of anger in the user mood. Similarly, the wider lips may indicate that the user is in a joyous mood. In an embodiment, the threshold levels of these contour features are selected based on previously recorded expressions and emotions of the user. The contours may be detected using a suitable edge detection technique such as Sobel filtering and Harr transformation.

In an embodiment, the social media integration module **219** may be configured to ingest and leverage the one or more information associated with the user from the one or more social media profiles of the user for identifying one or more user specific information associated with the user. The user's way of expressing concepts and the user's reactions towards various situations may be obtained from the social media activities of the user, which in turn are used to detect the personality of the user **211.**

In an embodiment, the social media integration module **219** may collect all possible information about the user and use the collected information to build a universal profile of the user, which is to be maintained and accessed securely by the response generating system **103** during its conversation with the user. The universal profile of the user may indicate the behavior and actions of the user across multiple contexts, places, interactive systems and various types of transactions. As an example, consider a user "Bob" who has posted that he would be moving to London for higher studies, on one of his social media profiles. Now, when Bob asks for details of an education loan, the response generating system **103** would first give details of international loans considering Bob's interest to study in London.

Further, the one or more response provided to the users may also depend on 'class' to which the user belongs such as, student, working and retired class. Accordingly, when a student asks for details of a loan, the system would provide details of the education loan in greater depth considering that the user is a student. Similarly, when a 'working' class user asks for the same, the system would provide details of home or vehicle loan considering that the user belongs to a working class. Hence, the one or more adaptive responses **115** provided to two users may greatly vary even when both the users have same personality and accent/slang.

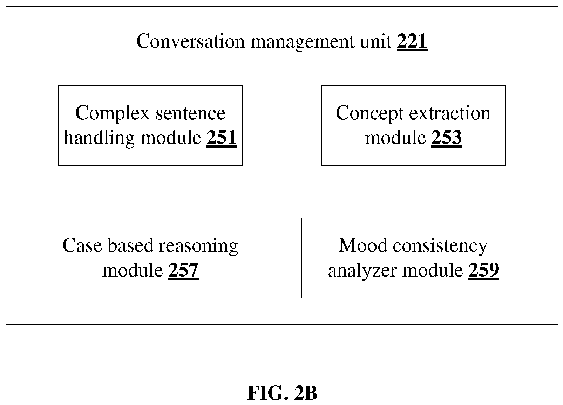

In an embodiment, the conversation management unit **221** may be used to manage the overall conversation between the user and the response generating system **103** and to extract the one or more generic characteristics **205,** one or more user specific features **207** and one or more domain specific keywords **209** from the user interactions **101.** The conversation management unit **221** is responsible for extracting and understanding the intent of the user. In an implementation, the functions of the conversation management unit **221** may be classified among the four sub-modules namely, a complex sentence handling module **251,** a concept extraction module **253,** a case based reasoning module **257** and a mood consistency analyzer module **259,** as illustrated in **FIG. 2B****.**

### a. Complex sentence handling module 251:

The functionality of the complex sentence handling module **251** is to separate the one or more complex and multiple sentences into less complex individual sentences and to extract relationships among various features of the keywords in the sentences such as, pronouns, nouns and noun phrases associated with the user interactions **101.** For example, a user may ask a query such as, "What is the interest rate for Rs. 1000 for a period of 50 days". Since the above query comprises multiple sub-queries to be answered, the complex sentence handling module **251** may break the above query into two separate queries such as: "What is the interest rate for Rs. 1000" (A) and "What is the interest rate for a period of 50 days" (B). Now, the response generating system 103 may analyze both the queries separately and compute separate responses to both the queries, as if the two queries (A) and (B) are not related to each other. Further, the individual responses of the queries (A) and (B) may be combined while providing a suitable response to the original user query.

However, if the user asks for a complex query which is beyond the above said computation or which is not mentioned in rules and/or frequently asked questions about the domain, the complex sentence handling module **251** provides the pointers such as contact numbers of domain experts who can answer such complex queries.

### b. Concept extraction module 253:

The concept extraction module **253** may be used to identify the domain specific intents of the user. In an embodiment, information expressed in the user utterances such as date, time, named-entities and the one or more domain specific keywords **209** are extracted using the concept extraction module **253** for identifying the domain specific to the user utterances. In an embodiment, the concept extraction module **253** may derive the context of the conversation based on the contextual interpretation of words and phrases used by the user during the conversation.

Often, the concept extraction module **253** interprets a phrase based on the personality of the user **211** and the context of the conversation, without directly considering the literal meaning of the phrase used by the user. For example, when a child says "My father beats me", it may really mean that the child's father beats him. But, when an employed user says "My office manager beats me", it may mean that the user is facing a trouble by his office manager (and not the literal meaning of beating).

### c. Case based reasoning module 257:

The case based reasoning module **257** may be used to map the user specific characteristics associated with the user with one or more pre-stored cases learnt from the training data set. Further, the case based reasoning module **257** learns every new case as a part of the feedback learning mechanism. In an embodiment, the training data set may be generated in a semi-automated way as explained below. The cases contain one or more user-attributes that map with the user personality **211.** The one or more generic characteristics **205** related to the user, such as age, gender, profession may be automatically extracted from the profile of the user that is stored in the application specific profiles (E.g.: Profiles of the user that are stored in bank/university/work place etc.) and publically available profile of the user in social media. In addition, the conversation history **111** and the activities of the user in social media during a relevant time of conversation may be clustered to create the training data set. Further, the cases may be manually verified and approved before they are used by the response generating system **103.** The above process ensures that the cases are built or updated in quick time. In an embodiment the irrelevant cases may be removed during manual verification process.

In an embodiment, the case based reasoning module **257** makes use of the four case-handling mechanisms which are, retrieving similar cases from the training data sets, reusing the retrieved case on the new user utterance, revising the new case if any correction is required and retaining the revised case back in the training data sets. Initially each of the one or more user specific features 207 is indexed along with a predetermined domain specific vocabulary. Later the user utterances are mapped against a relevant case using a combination of similarity and dissimilarity detection to detect the one or more cases that are similar to the new case. The current disclosure mainly focuses on creating a new category (case) based on the deviations (dis-similarities) in the one or more user specific features **207** associated with the user such as mood, accent and context that are captured by means of text, audio and/or video inputs. Further, the closeness and deviation both are analyzed with different cases and accordingly a new use case is built.

### d. Mood consistency analyzer module 259:

In an embodiment, the mood consistency analyzer module **259** identifies changes in the mood of the user by comparing the current mood of the user with the mood of the user detected during initial conversation of the user and the response generating system **103.** The conversation history **111** retain various features of the user personality **211** such as, relationships between the mood changes and the one or more adaptive responses **115** which are leveraged using the one or more generic characteristics **205** and the one or more user-specific features associated with the user. Further, the case-based reasoning module may be used in conjunction with the mood consistency analyzer module **259** to handle the generic characteristic mapping and the feed-back based learning techniques of the conversation management unit **221.** In addition, the relevance and deviation among the one or more generic characteristics **205** and the one or more user specific features **207** are correlated during consistency analysis.

In an embodiment, the output from the mood consistency analyzer module **259** may be used to dynamically generate the one or more adaptive responses **115** to the user queries, such that the one or more adaptive responses **115** match to the variations in the mood and personality of the user **211.** For example, if a user, who normally has a jovial personality, is sad due to a raise in interest rate, the response generating system **103** may say how the interest rates can be reduced with necessary explanations on various interest rate reducing schemes. On the other hand, the system may not attempt to give a detailed explanation to a user, who has a serious personality and/or if the user does not like to involve in a lengthy conversation.

In another scenario, the mood consistency analyzer module **259** may identify the intentions of the user based on the emotions of the user during the conversation. The effects of the emotional variations of the user are treated based on the personality of the user. For example, when a user says "I will kill the dog", the system may not give much importance to the literal meaning of the sentence if the personality of the user indicates that he is a 'pet lover'. Hence, the above sentence may be considered to understand that the user is in anger and/or frustration. On the other hand, if the personality of the user indicates that he is a 'habitual offender' (instead of a 'pet lover') then the literal meaning of the sentence may be considered and responded suitably based on the intensity of the anger and/or frustration of the user.

In an embodiment, the personality detection module **223** detects personality of the user **211** based on the one or more generic characteristics **205** and the one or more user specific features **207** which includes one or more keywords that are most often used by the user over a period of time. These keywords may be categorized as offending words, non-offending words, filler words, start of sentence words, unnecessarily repeated words (E.g.: "so"), domain specific words, synonym words (E.g.: 'Monthly income' in place of 'Salary') and so on. In an embodiment the offending words, unnecessarily repeated words etc. may get removed automatically. The database may store these keywords along with a list of synonyms for better understanding of intent of the user. In one context, repeated use of the user specific keywords may offend the user. For example, if the user is habituated to use the keyword "so" at the beginning of each sentence, it would be offending if the system also follows the same. In another context, making use of the user specific keywords may be desirable during the conversation. For example, if the user refers to "Monthly income" as "Salary", then the system may use the word "Salary" throughout the conversation, thereby giving a feel of comfort to the user.

The user's conversation with the response generating system **103** contains rich information on the one or more generic characteristics **205** such as, user's preferences, language style and consistency of emotional characteristics. The personality detection module **223** exploits this information to detect the personality of the user **211** and to increase the efficacy of the feedback based learner system. The personality **211** and the consistency of emotional levels of the user during the current conversation are tracked to provide the one or more adaptive responses **115** to the user.

In an embodiment, an extraction technique such as, 'n-grams' extraction technique may be applied on the conversation history **111** for identifying the one or more user specific features **207** that are from the training data set of the case based reasoning module 257. The new distinguishing features that are specific to the user's way of expression are separated and stored in the personality of the user **211.** For example, the slang words, accents and keywords used by the user are continuously learnt and updated in the personality of the user **211**.

In another embodiment, the personality detection module **223** ensures that the one or more user specific features **207** associated with the user are not forcefully categorized under one of the existing personalities. The conversation is driven separately for each user and the differences in the behaviour and personality of the user **211** are tracked separately. Also, the uniqueness in the personality of the user **211** is retained and the one or more adaptive responses **115** are generated according to the unique behaviour and personality of the user **211.** This aspect of retaining the unique personality of the user **211** helps the response generating system **103** to provide more precise information, reduce number of user queries and enhanced user satisfaction. For example, when a student visits banking query system, the general tendency is to ask for educational loan. However, if a particular student is not interested, the conversation will be a waste. Hence, the response generating system **103** may avoid these wasteful conversations by understanding the personality and interests of the user.

In an embodiment, the adaptive response generation module **227** is responsible for generating the one or more adaptive responses **115** to the one or more user queries. The one or more adaptive responses **115** are a combination of domain specific information that may be expressed using the one or more user specific features **207** related to the personality of the user **211.** The outcome of the mood consistency analyzer module **259** and the ontology based model along with relevant slot for providing the one or more adaptive responses **115** are used as an input to the adaptive response generation module **227** to generate the one or more adaptive responses **115.**

In an embodiment, the adaptive response generation module **227** may choose one of the pre-stored responses based on the variations in the mood of the user. The chosen pre-stored responses may be provided to the user when the response generating system **103** initiates the conversation itself. However, upon starting the conversation, the response generating system **103** may use the one or more pre-stored responses such as, advertisements to advertise about a product that best suits with the profile of the user. For example, the response generating system **103** may pull out a pre-stored response of providing an education loan for a student whose bank balance is low.

In an embodiment, the adaptive response generation module **227** may have to consider the following two points during generation of the one or more adaptive responses **115** to the user queries:

### 1. Apply User-specific traits to generate responses:

Any conversation will be successful if the language and accent are comprehensible to the user. The best option is to speak in the language of the user. This may be possible by selecting the user's choice of words and the accent in the one or more adaptive responses **115.** A personal dictionary of the user's choice of words may be maintained for enabling the selection of user's choice of words. In an embodiment, the user interactions **101** in the text format may be converted to speech, compared with the uttered speech to get modulation and accent information of the user. This modulation may be supplied to a text-to-speech engine in the response generating system **103** to generate the personalized way of voice response for the user. Accordingly, the response generation module dynamically selects the most suitable accent and voice in which the one or more adaptive responses **115** are to be presented to the user. For example, the adaptive response generation module **227** may select the voice of a child to influence a child, voice of a woman to discuss personal/health problem of a woman, to make the women more comfortable.

Furthermore, the adaptive response generation system may select an accent for the one or more adaptive responses **115** based on the application and/or purpose for which the user has raised the queries. For example, during the conversation with a native Indian user, who is about to go to United States, the system starts the conversation in the Indian accent. However, by the end of conversation, it would shift to the American English accent slowly, giving a feeling of comfort for the user. Similarly, if a user is interested in understanding correct ways of expression/mimicry/rehearsal for an effective handling of different classes of people, the system generates the adaptive responses **115** accordingly.

In an embodiment, the response generating system **103** may attempt to provide human touch to the conversation to ensure that the user enjoys a feel of comfort throughout the conversation. This approach may be initiated depending on the current mood of the user. For example, the response generating system 103 may say "You look bright in this blue shirt" when the user is wearing a blue shirt, thereby further enhancing the mood of the user.

### 2. Graceful exit during the conversation and redirecting to domain experts:

In an embodiment, when the response generating system **103** is not able to comprehend the user interactions **101,** even after multiple requests for rewording, or unable to provide the requisite information, it provides one or more suggestions to the user. The one or more suggestions may be to consult a domain expert, call a human agent or provide requisite information such as, contact information of the domain experts and human agents to carry out the same. The response generating system **103** may then proceed with the conversation or exit with a 'bye' as appropriate. Further, if the user asks any irrelevant questions (such as weather of the city or football match details), the response generating system **103** may redirect the user into the main conversation thread by reminding him that the service is limited only to the domain related queries.

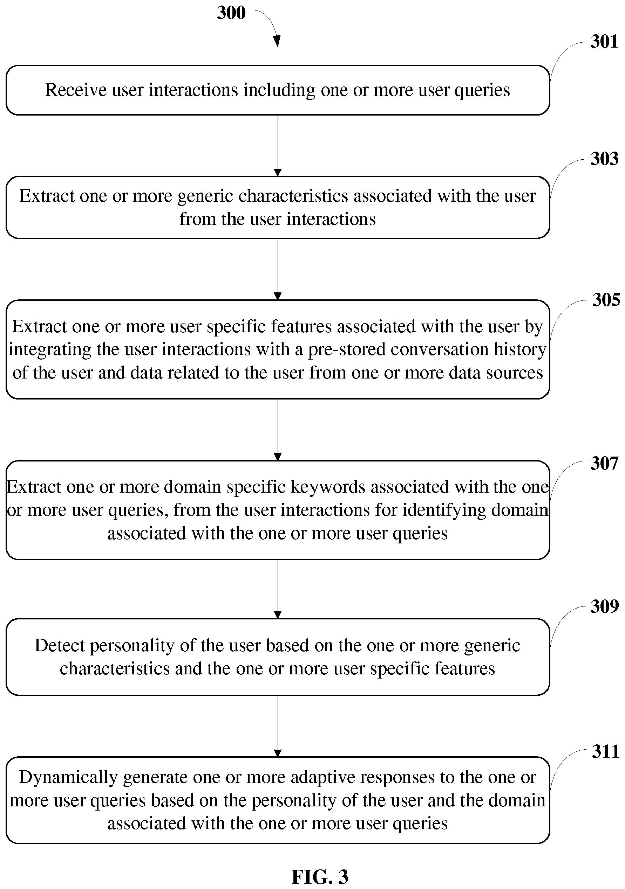

**FIG. 3** shows a flowchart illustrating a method for dynamically generating adaptive responses to one or more user interactions in accordance with some embodiments of the present disclosure.

As illustrated in **FIG. 3****,** the method **300** comprises one or more blocks for dynamically generating adaptive response to the one or more user interactions using a response generating system **103.** The method **300** may be described in the general context of computer executable instructions. Generally, computer executable instructions can include routines, programs, objects, components, data structures, procedures, modules, and functions, which perform particular functions or implement particular abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 301,** a response generating system **103** receives user interactions **101** including one or more user queries from a user. The user interactions **101** may be received in one or more data formats comprising at least one of text, audio or video, as may be convenient to the user.

At **block 303,** the response generating system **103** extracts one or more generic characteristics **205** associated with the user from the user interactions **101.** As an example, the one or more generic characteristics **205** may comprise at least one of emotions of the user, expression and actions of the user or one or more linguistic variations, such as accent, loudness and pitch in the tone of the user while receiving the user interactions **101.**

At **block 305,** the response generating system **103** extracts one or more user specific features **207** associated with the user by integrating the user interactions **101** with a pre-stored conversation history of the user and data related to the user from one or more data sources **113.** The pre-stored conversation history comprises one or more conversation history **111** of the conversations between the user and the response generating system **103,** which may be analyzed for identifying conversation pattern of the user. As an example, the one or more data sources **113** associated with the user may include profiles of the user on various social media sites.

At **block 307,** the response generating system **103** extracts one or more domain specific keywords **209** associated with the one or more user queries, from the user interactions **101** for identifying domain associated with the one or more user queries.

At **block 309,** the response generating system **103** detects personality of the user **211** based on the one or more generic characteristics **205** and the one or more user specific features **207.** As an example, the personality of the user **211** may comprise, without limiting to, at least one of one or more personal details of the user, mood of the user during initial conversation of the user with the response generating system **103** or interests of the user. In an embodiment, the response generating system **103** may determine consistency in mood of the user before generating the one or more adaptive responses **115** to the user queries. In one scenario, the consistency in the mood of the user may be determined by comparing current mood of the user with the mood of the user during initial conversation of the user with the response generating system **103.**

At **block 309,** the response generating system **103** dynamically generates one or more adaptive responses **115** to the one or more user queries based on the personality of the user **211** and the domain associated with the one or more user queries. In an embodiment, the method **300** further comprises providing one or more suggestions to the user when the response generating system **103** is unable to extract the one or more generic characteristics **205,** the one or more user specific features **207** and the one or more domain specific keywords **209** from the user interactions **101.** As an example, the one or more suggestions comprises at least one of consult a domain expert or consult a support person, along with one or more predetermined information related to the one or more suggestions.

### Computer System

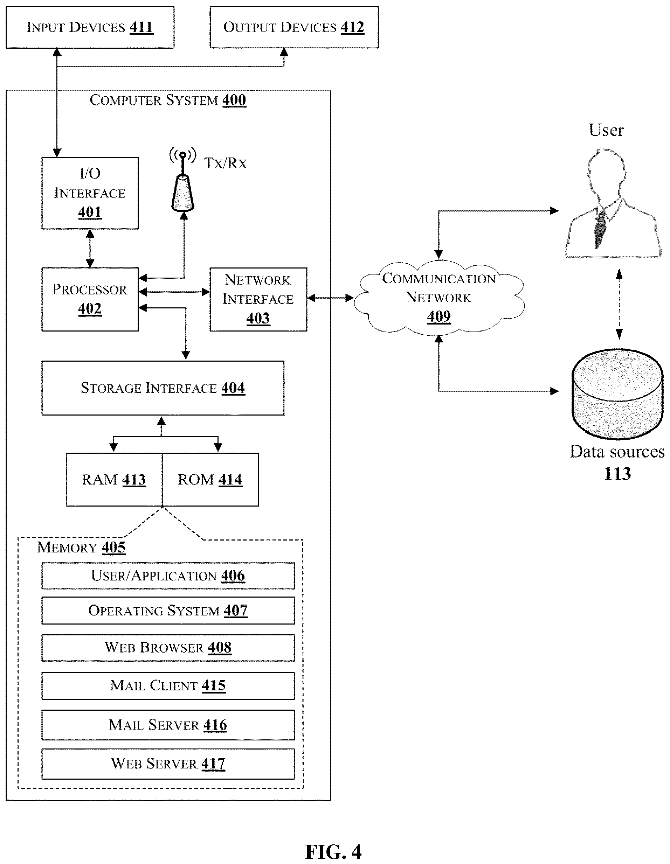

**Fig.4** illustrates a block diagram of an exemplary computer system **400** for implementing embodiments consistent with the present invention. In an embodiment, the computer system **400** can be the response generating system **103** which is used for dynamically generating adaptive responses to user interactions. The computer system **400** may comprise a central processing unit ("CPU" or "processor") **402.** The processor **402** may comprise at least one data processor for executing program components for executing user- or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices **(411** and **412)** via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc.

Using the I/O interface **401,** the computer system **400** may communicate with one or more I/O devices **(411** and **412).**

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **403** and the communication network **409,** the computer system **400** may communicate with the user and the one or more sources **113** associated with the user. The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc.

In some embodiments, the processor **402** may be disposed in communication with a memory **405** (e.g., RAM **413,** ROM **414,** etc. as shown in **FIG. 4****)** via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magnetooptical drive, optical drive, Redundant Array of Independent Discs (RAID), solid-state memory devices, solid-state drives, etc.

The memory **405** may store a collection of program or database components, including, without limitation, user/application data **406,** an operating system **407,** web server **408** etc. In some embodiments, computer system **400** may store user/application data **406,** such as the data, variables, records, etc. as described in this invention. Such databases may be implemented as fault-tolerant, relational, scalable, secure databases such as Oracle or Sybase.

The operating system **407** may facilitate resource management and operation of the computer system **400.** Examples of operating systems include, without limitation, Apple Macintosh OS X, UNIX, Unix-like system distributions (e.g., Berkeley Software Distribution (BSD), FreeBSD, Net BSD, Open BSD, etc.), Linux distributions (e.g., Red Hat, Ubuntu, K-Ubuntu, etc.), International Business Machines (IBM) OS/2, Microsoft Windows (XP, Vista/7/8, etc.), Apple iOS, Google Android, Blackberry Operating System (OS), or the like. A user interface may facilitate display, execution, interaction, manipulation, or operation of program components through textual or graphical facilities. For example, user interfaces may provide computer interaction interface elements on a display system operatively connected to the computer system **400,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system **400** may implement a web browser **408** stored program component. The web browser may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **400** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Advantages of embodiments of the present disclosure are described in the following paragraphs.

In an embodiment, the present disclosure provides a method for dynamically generating adaptive responses to user queries based on user specific features and personality of the user.

In an embodiment, the method of present disclosure reduces total time of conversation between the user and a user-query handling system, thereby minimizing the time spent in handling each user query.

In an embodiment, the method of present disclosure enhances the user experience by providing one or more user-specific responses to the user based on the personality and mood of the user.

In an embodiment, the method of present disclosure results in better understanding and management of customer and/or user by handling user-specific emotions during the conversation with the user.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise. A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A computer-implemented method for dynamically generating an adaptive response to one or more user interactions, the method comprising:
receiving, by a response generating system (103), one or more user interactions (101) including one or more user queries;
extracting, by the response generating system (103), one or more generic characteristics (205) associated with the user from the user interactions (101);
extracting, by the response generating system (103), one or more user specific features (207) associated with the user by integrating the user interactions (101) with a pre-stored conversation history (111) of the user and data related to the user from one or more data sources (113);
extracting, by the response generating system (103), one or more domain specific keywords (209) associated with the one or more user queries, from the user interactions (101) for identifying domain associated with the one or more user queries;
detecting, by the response generating system (103), personality of the user (211) based on the one or more generic characteristics (205) and the one or more user specific features (207); and
generating, by the response generating system (103), dynamically, one or more adaptive responses (115) to the one or more user queries based on the personality of the user (211) and the domain associated with the one or more user queries.

2. The method as claimed in claim 1, wherein the user interactions (101) are received in one or more data formats comprising at least one of text, audio or video.

3. The method as claimed in claim 1 or claim 2, wherein the personality of the user (211) comprises at least one of: one or more personal details of the user; a mood of the user during an initial conversation of the user with the response generating system (103); or one or more interests of the user.

4. The method as claimed in any of the preceding claims, wherein the one or more generic characteristics (205) comprises at least one of: one or more emotions of the user; an expression of the user; one or more actions of the user; or one or more linguistic variations in the user interactions (101).

5. The method as claimed in any of the preceding claims, further comprising determining consistency in mood of the user for generating the one or more adaptive responses (115) to the user queries.

6. The method as claimed in claim 5, wherein the consistency in the mood of the user is determined by comparing a current mood of the user with the mood of the user during an initial conversation of the user with the response generating system (103).

7. The method as claimed in any of the preceding claims, further comprising providing one or more suggestions to the user when the response generating system (103) is unable to extract the one or more generic characteristics (205), the one or more user specific features (207) and the one or more domain specific keywords (209) from the user interactions (101).

8. The method as claimed in claim 7, wherein the one or more suggestions comprises at least one of consult a domain expert or consult a support personnel, along with one or more predetermined information related to the one or more suggestions.

9. A response generating system (103) for dynamically generating an adaptive response to one or more user interactions, the response generating system (103) comprising:
a processor (109); and
a memory (107) communicatively coupled to the processor (109), wherein the memory (107) stores processor-executable instructions, which, on execution, causes the processor (109) to:
receive one or more user interactions (101) including one or more user queries;
extract one or more generic characteristics (205) associated with the user from the user interactions (101);
extract one or more user specific features (207) associated with the user, by integrating the user interactions (101) with a pre-stored conversation history (111) of the user and data related to the user from one or more data sources (113);
extract one or more domain specific keywords (209) associated with the one or more user queries, from the user interactions (101) for identifying domain associated with the one or more user queries;
detect personality of the user (211) based on the one or more generic characteristics (205) and the one or more user specific features (207); and
generate, dynamically, one or more adaptive responses (115) to the one or more user queries based on the personality of the user (211) and the domain associated with the one or more user queries.

10. The response generating system (103) as claimed in claim 9, wherein the processor (109) is configured to receive the user interactions (101) in one or more data formats comprising at least one of text, audio or video.

11. The response generating system (103) as claimed in claim 9 or claim 10, wherein:
the personality of the user (211) comprises at least one of one or more personal details of the user, a mood of the user during an initial conversation of the user with the response generating system (103), or one or more interests of the user; and/or
the one or more generic characteristics (205) comprises at least one of one or more emotions of the user, an expression of the user, one or more actions of the user or one or more linguistic variations in the user interactions (101).

12. The response generating system (103) as claimed in any of claims 9 to 11, wherein the processor (109) is configured to determine consistency in mood of the user to generate the one or more adaptive responses (115) to the user queries and, optionally, the processor (109) is further configured to determine the consistency in the mood of the user by comparing a current mood of the user with the mood of the user during an initial conversation of the user with the response generating system (103).

13. The response generating system (103) as claimed in any of claims 9 to 12, wherein the processor (109) provides one or more suggestions to the user when the response generating system (103) is unable to extract the one or more generic characteristics (205), the one or more user specific features (207) and the one or more domain specific keywords (209) from the user interactions (101).

14. The response generating system (103) as claimed in claim 13, wherein the one or more suggestions comprises at least one of consult a domain expert and consult a support personnel along with one or more predetermined information related to the one or more suggestions.

15. A computer-readable medium comprising instructions which, when executed by a computer, cause the computer to perform the method of any of claims 1 to 8.
